# EUROPÄISCHE PATENTSCHRIFT

(11) **EP 4 306 747 B1**
(45) Veröffentlichungstag und Bekanntmachung des Hinweises auf die Patenterteilung: **15.01.2025**
(21) Anmeldenummer: 23168890.4
(22) Anmeldetag: 20.04.2023
(51) Int. Cl.: E04H 4/12, C02F 1/00

(54) **BADEWASSERAUFBEREITUNGSANLAGE**
BATHING WATER TREATMENT SYSTEM
SYSTÈME DE TRAITEMENT DES EAUX DE BAIGNADE

(30) Priorität: 15.07.2022 CH 842202022
(43) Veröffentlichungstag der Anmeldung: 17.01.2024
(73) Patentinhaber: Geoloop Bädertechnik GmbH, 8832 Wollerau (CH)
(72) Erfinder: BRINER, Kevin, 8853 Lachen (CH)
(74) Vertreter: Rigling, Peter Daniel

(56) Entgegenhaltungen:
- EP-A1- 0 306 814
- DE-A1- 102022 001 793
- DE-U1- 202017 102 207
- DE-U1- 202018 102 369
- US-A- 4 389 739

## Beschreibung

### TECHNISCHES GEBIET

Die vorliegende Erfindung betrifft eine Badewasseraufbereitungsanlage nach dem Oberbegriff gemäss Anspruch 1.

### STAND DER TECHNIK

Für die Badewasseraufbereitung bei öffentlichen und zunehmend auch bei privaten Bädern wird um das Becken eine Überlaufrinne mit einem Ausgleichsbecken gewählt, um verdrängtes Beckenwasser, auch etwa Schwallwasser genannt, und die gesamte Umwälzung über die Überlaufrinne drucklos in die meist unter dem Beckenwasserspiegel angeordnete Technik in einem einzige Pumpenkreislauf abführen zu können. Der gesamte Volumenstrom muss anschliessend wieder auf das Niveau des Beckens zuzüglich aller Druckverluste gepumpt werden. Der gesamte geodätische Druck, der durch den Höhenunterschied zwischen der Überlaufrinne und dem Ausgleichsbecken entsteht, wird bis auf die Höhe des Wasserspiegels vom Ausgleichsbecken vernichtet, womit die Leistung der eingesetzten Pumpe nicht nur alle Verluste des Rohrleitungs- und Filtersystems kompensieren muss, sondern zusätzlich ausreichend stark sein muss, um eben auch den gesamten Volumenstrom wieder auf das Beckenniveau befördern zu können. Um die Pumpenleistung reduzieren zu können, wurde in DE 20 2017 102 207 U1 und in DE 20 2018 102 369 U1 vorgeschlagen, neben dem Ausgleichsbecken für Schwallwasser einen Zwischenbehälter zum unmittelbaren Aufnehmen von Schwallwasser vorzusehen, welcher mit einer Filteranlage verbunden ist, wobei im Zwischenbehälter der höhere Druck herrscht und ein Überlauf zum ständigen Abfliessen eines Anteils des anfallenden Schwallwassers in einem Ausgleichsbehälter vorgesehen ist. Durch den

Druckunterschied zwischen dem im Zwischenbehälter gestauten Schwallwassers und dem Wasser im Filter gelangt das Schwallwasser passiv, d.h. ohne Pumpenunterstützung, direkt in den Filter. Lediglich der Anteil des Schwallwasser, der im Zwischenbehälter nicht aufgenommen werden kann und demzufolge via Überlauf in das Ausgleichsbecken fliesst, muss mit einer Pumpe zum Filter und/oder zum Zwischenbehälter gepumpt werden. Da sowohl der Zwischenbehälter als auch das Ausgleichsbecken unterhalb dem Beckenwasserspiegel angeordnet sind, verliert man auch bei dieser bekannten Lösung die durch den Höhenunterschied zwischen Becken und Zwischenbehälter bzw. Ausgleichsbecken vorhandene potentielle Energie. EP0306814A1 offenbart eine Badewasseraufbereitungsanlage gemäß der Präambel des Anspruchs 1.

### BESCHREIBUNG DER ERFINDUNG

Eine Aufgabe der vorliegenden Erfindung besteht daher darin, eine Badewasseraufbereitungsanlage bereitzustellen, die geringere Energieverluste aufweist als bekannte Anlagen.

Diese Aufgabe wird durch eine Badewasseraufbereitungsanlage mit den Merkmalen des Anspruchs 1 gelöst. Weitere Ausführungsformen sind durch die Merkmale von weiteren abhängigen Ansprüchen definiert.

Die erfindungsgemässe Badewasseraufbereitungsanlage weist ein Becken mit Überlaufrinne zum Auffangen von Badewasser und mit einem Ausgleichsbecken zum Aufnehmen von Schwallwasser auf. Die Erfindung zeichnet sich dadurch aus, dass ein erster Kreislauf von der Überlaufrinne in das Ausgleichsbecken und von diesem über eine erste Pumpe zurück zum Becken führt, wobei der erste Kreislauf Badewasser in der Überlaufrinne auf einem ersten Niveau abgreift, dass ein zweiter Kreislauf von der Überlaufrinne über eine zweite Pumpe zurück zum Becken führt, wobei der zweite Kreislauf Badewasser in der Überlaufrinne auf einem zweiten Niveau abgreift, und dass das erste Niveau höher als das zweite Niveau ist.

Eine Ausführungsvariante der erfindungsgemässen Badewasseraufbereitungsanlage besteht darin, dass das Ausgleichsbecken, die erste Pumpe und die zweite Pumpe unterhalb des Beckens angeordnet sind.

Weitere Ausführungsvarianten der erfindungsgemässen Badewasseraufbereitungsanlage bestehen darin, dass die erste und zweite Pumpe derart eingestellt sind, dass ein Durchflussverhältnis von 1:10 bis 3:10, vorzugsweise 1:10, zwischen dem ersten und dem Gesamtvolumenstrom erhältlich ist, wenn kein Schwallwasser vorhanden ist.

Damit wird das erste Niveau vorzugsweise so hoch wie möglich angeordnet, dass allfälliges Schwallwasser von der gesamten Überlaufrinne aufgenommen werden kann, ohne dass es zu einem Überschwappen der Überlaufrinne kommt.

Weitere Ausführungsvarianten der erfindungsgemässen Badewasseraufbereitungsanlage bestehen darin, dass eine Filtereinheit mit einem Filtereingang und einem Filterausgang vorgesehen ist, dass der Filtereingang sowohl mit dem ersten Kreislauf als auch mit dem zweiten Kreislauf wirkverbunden ist und dass der Filterausgang mit dem Becken wirkverbunden ist.

Weitere Ausführungsvarianten der erfindungsgemässen Badewasseraufbereitungsanlage bestehen darin, dass der erste Kreislauf, in Flussrichtung im ersten Kreislauf gesehen, nach der ersten Pumpe mit dem zweiten Kreislauf wirkverbunden ist.

Weitere Ausführungsvarianten der erfindungsgemässen Badewasseraufbereitungsanlage bestehen darin, dass der zweite Kreislauf, in Flussrichtung im zweiten Kreislauf gesehen, nach der zweiten Pumpe mit dem ersten Kreislauf wirkverbunden ist.

Weitere Ausführungsvarianten der erfindungsgemässen Badewasseraufbereitungsanlage bestehen darin, dass der zweite Kreislauf, in Flussrichtung sowohl im ersten als auch im zweiten Kreislauf gesehen, vor der zweiten Pumpe mit dem ersten Kreislauf wirkverbunden ist und dass die zweite Pumpe mit dem Filtereingang wirkverbunden ist.

Weitere Ausführungsvarianten der erfindungsgemässen Badewasseraufbereitungsanlage bestehen darin, dass der zweite Kreislauf, in Flussrichtung gesehen, vor der zweiten Pumpe mit dem ersten Kreislauf wirkverbunden ist und dass der Filterausgang mit der zweiten Pumpe wirkverbunden ist.

Weitere Ausführungsvarianten der erfindungsgemässen Badewasseraufbereitungsanlage bestehen darin, dass im zweiten Kreislauf ein Drucksensor nach der Überlaufrinne angeordnet ist.

Weitere Ausführungsvarianten der erfindungsgemässen Badewasseraufbereitungsanlage bestehen darin, dass der Drucksensor mit einer Steuereinheit wirkverbunden ist, die ihrerseits sowohl mit der ersten als auch mit der zweiten Pumpe wirkverbunden ist.

Die erwähnten Ausführungsvarianten der Badewasseraufbereitungsanlage lassen sich in beliebiger Weise kombinieren, sofern sich durch eine Kombination der Ausführungsvarianten keine Widersprüche ergeben. Dies gilt in gleicher Weise für die nachfolgenden, noch im Detail zu beschreibenden Ausführungsvarianten.

### KURZE BESCHREIBUNG DER FIGUREN

Ausführungsvarianten der vorliegenden Erfindung werden nachstehend anhand von Figuren noch näher erläutert. Diese dienen lediglich zur Erläuterung und sind nicht einschränkend auszulegen. Es zeigen
- Fig. 1: eine bekannte Badewasseraufbereitungsanlage mit einem einzigen Umwälzkreislauf,
- Fig. 2: eine erste Ausführungsvariante einer erfindungsgemässen Badewasseraufbereitungsanlage mit einem ersten und einem zweiten Kreislauf,
- Fig. 3: eine zweite Ausführungsvariante einer erfindungsgemässen Badewasseraufbereitungsanlage ebenfalls mit zwei Kreisläufen,
- Fig. 4: eine dritte Ausführungsvariante einer erfindungsgemässen Badewasseraufbereitungsanlage ebenfalls mit zwei Kreisläufen und
- Fig. 5: eine vierte Ausführungsvariante einer erfindungsgemässen Badewasseraufbereitungsanlage mit zwei Kreisläufen.

### DETAILLIERTE BESCHREIBUNG VON AUSFÜHRUNGSVARIANTEN DER VORLIEGENDEN ERFINDUNG

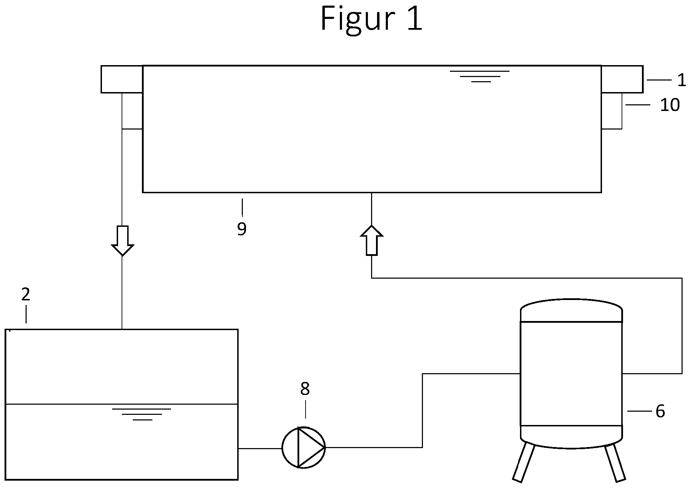

Die Fig. 1 zeigt eine schematische Darstellung einer bekannten Badewasseraufbereitungsanlage für ein Becken 9 (beispielsweise ein Schwimmbecken für ein öffentliches oder ein privates Schwimmbad) mit einer Überlaufrinne 1, in die einerseits verdrängtes Beckenwasser - sogenanntes Schwallwasser - und andererseits Umwälzwasser aufgenommen wird und in der Folge drucklos in ein meist darunterliegendes Ausgleichsbecken 2 abgeführt wird. Eine Pumpe fördert das im Ausgleichsbecken 2 enthaltene Beckenwasser via einer Filtereinheit 6 zurück ins Becken 9.

Der gesamte Volumenstrom muss somit vom Niveau des Ausgleichsbeckens 2 wieder auf das Niveau des Beckens 9 zuzüglich aller Druckverluste mit der Pumpe gepumpt werden. Der gesamte geodätische Vordruck (bzw. die potentielle Energie des Beckenwassers auf dem Niveau des Beckens 9) wird bis auf die Höhe des Wasserspiegels vom Ausgleichsbecken 2 vernichtet.

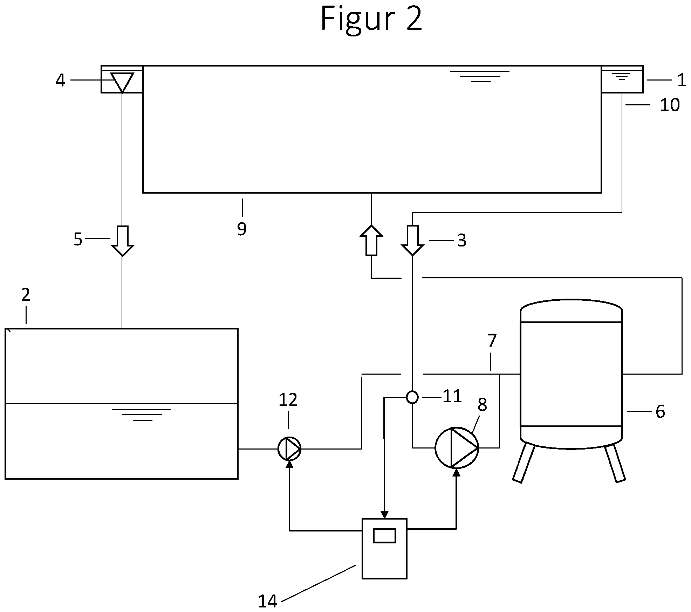

Fig. 2 zeigt eine erste Ausführungsvariante der vorliegenden Erfindung mit dem Becken 9 und der Überlaufrinne 1, in die Umwälzwasser und Schwallwasser aufgenommen wird. Erfindungsgemäss führen zwei Kreisläufe, ein erster Kreislauf 5 und ein zweiter Kreislauf 3, von der Überlaufrinne 1 weg. Über den ersten Kreislauf 5 wird Schwallwasser, das dem durch Personen im Becken verdrängtes Beckenwasser entspricht, in ein Ausgleichsbecken 2 geführt.

Das Ausgleichsbecken 2 befindet sich unterhalb des Wasserspiegels des Beckens 9, weshalb hierzu keine Pumpleistung erforderlich ist. Aus dem Ausgleichsbecken 2 pumpt eine erste Pumpe 12 das Schwallwasser in Richtung Filtereinheit 6 und von dieser zurück ins Becken 9.

Ein zweiter Kreislauf 3, der ebenfalls von der Überlaufrinne 1 ausgeht, führt direkt via einem optionalen Drucksensor 11 in den Einlauf einer zweiten Pumpe 8, welche Ausgangsseitig mit dem ersten Kreislauf 5 vor der Filtereinheit 6 zusammengeführt ist, mithin fliesst das Schwallwasser und das Umwälzwasser bei dieser Ausführungsvariante der vorliegenden Erfindung zusammen durch die Filtereinheit 6 und zurück zum Becken 9.

In einer weiteren Ausführungsvariante der vorliegenden Erfindung wird über den zweite Kreislauf 3 (Umwälzkreislauf) beispielsweise ca. 90% der Gesamtumwälzmenge geführt. Der geodätische Vordruck (Wasserspiegel in der Überlaufrinne 1) saugseitig der zweiten Pumpe 8 wird dabei beibehalten. Dies wird erreicht, indem der zweite Kreislauf 3 geschlossen und nicht über das Ausgleichsbecken 2 geführt wird. In der Überlaufrinne 1 wird auf einem zweiten Niveau das Badewasser in den zweiten Kreislauf 3 abgeführt, wobei das zweite Niveau beispielsweise auf dem tiefsten Punkt der Überlaufrinne 1 liegt. Der zweite Kreislauf 3 weist eine Fördermenge auf, die von der Umwälzleistung der zweiten Pumpe 8 abhängig ist.

Damit die gewünschten 90% der Gesamtumwälzmenge über die zweite Pumpe 8 und damit lediglich 10% der Gesamtumwälzmenge via dem Ausgleichsbecken 2 über die erste Pumpe 12 geführt wird, ist eine Steuereinheit 14 vorgesehen, die einerseits mit einem Drucksensor 11 im zweiten Kreislauf 3 und anderseits mit der ersten und der zweiten Pumpe 12 bzw. 8 zur Steuerung der jeweiligen Pumpenleistung wirkverbunden ist. Der Steuereinheit 14 wird der mittels dem Drucksensor 11 gemessene Druck zugeführt, mit dem die Pumpleistung der zweiten Pumpe 8 gesteuert wird, und zwar so, dass 70% bis 90%, vorzugsweise 90%, der Gesamtumwälzmenge über den zweiten Kreislauf 3 gefördert werden. Entsprechend entfallen 10% bis 30% der Gesamtumwälzmenge auf den ersten Kreislauf 5 via dem Ausgleichsbecken 2 und der ersten Pumpe 12. Damit ergeben sich die folgenden Vorteile:
- der erste Kreislauf 5 mit der ersten Pumpe 12 kann kleiner dimensioniert werden als dies bei bekannten Badewasseraufbereitungsanlagen der Fall ist;
- durch den geschlossenen zweiten Kreislauf 3 und der Wassersäule zwischen der Wasseroberfläche in der Überlaufrinne 1 und saugseitig der zweiten Pumpe 8 kann diese kleiner dimensioniert werden bzw. verbraucht diese weniger Energie beim Betreiben des zweiten Kreislaufes 3.

Die Position des Überlaufs 4 in der Überlaufrinne 1definiert das erste Niveau und ist der Überlauf des ersten Kreislaufs 5. In einer Ausführungsvariante bestimmt der Boden der Überlaufrinne 1 das zweite Niveau und dient als Abführung des zweiten Kreislaufes 3 aus der Überlaufrinne 1. Die nutzbare Höhe des zweiten Kreislaufes 3 definiert den Überlauf 4 und somit das erste Niveau. Ferner stellt die Überlaufrinne 1 den Puffer für den zweiten Kreislauf 3 dar.

Über den ersten Kreislauf 5 (Schwallwasserkreislauf), beginnend beim Überlauf 4 auf einem ersten Niveau in der Überlaufrinne 1, wird verdrängtes Badewasser (auch Schwallwasser genannt), welches den zweiten Kreislauf 3 überfüllt, ins Ausgleichsbecken 2 abgeführt. Anschliessend wird dieses Schwallwasser über die erste Pumpe 12 mit dem zweiten Kreislauf 3 zusammengeführt. Der erste Kreislauf 5 wird ebenfalls stetig betrieben, um so eine Umwälzung durch den ersten Kreislauf 5 über den Überlauf 4 auf dem ersten höherliegenden Niveau in der Überlaufrinne 1 und anschliessend in das Ausgleichsbecken 2 zu gewährleisten. Zudem können Schwankungen in der Überlaufrinne 1 besser aufgenommen werden. Die Umwälzleistung des ersten Kreislaufes 5 entspricht beispielsweise etwa 10% der Gesamtumwälzmenge.

Der geodätische Vordruck kann für den zweiten Kreislauf bis auf wenige Zentimeter Differenz zum Beckenwasserspiegel genutzt werden. Das reduziert den Energiebedarf der gesamten Umwälzleistung um rund 30%. Die Energiebilanz einer bekannten Umwälzpumpe kann wie folgt angegeben werden:
- mindestens 1/3 resultiert aus der geodätischen Höhe;
- ca. 1/3 durch den Widerstand der Filtereinheit;
- ca. 1/3 durch die Widerstände durch das Rohrleitungssystem und der Einströmelemente.

Da die Abführung der Umwälzmenge aus der Überlaufrinne 1 nicht mehr über ein frei ablaufendes Rohrsystem auszulegen ist, können die Leitungsdimensionen stark reduziert werden. Diese geringeren Leitungsdimensionen reduzieren die Erstellungskosten und den Materialaufwand.

Es wird darauf hingewiesen, dass in einer Badewasseraufbereitungsanlage das Ausgleichsbecken 2 als schmutzigste Stelle gilt. Dieses wird mit dem erfindungsgemässen Zweikreissystem mit ca. 90% der Gesamtumwälzmenge umgangen und das Beckenwasser kommt somit weniger mit dem Ausgleichsbecken 2 in Kontakt.

Da die Überlaufrinne 1 über den ersten Kreislauf 5 (Schwallwasserkreislauf) angestaut wird, ist die Geräuschbildung in einer Schwimmhalle wesentlich geringer.

Ergänzend wird nachfolgend anhand eines konkreten Zahlenbeispiels die Vorteile der erfinderischen Badewasseraufbereitungsanlage gegenüber der bekannten Badewasseraufbereitungsanlage weiter erläutert:
Bei Verwendung einer Filtereinheit vom Typ Druckfilter wird bei der bekannten Badewasseraufbereitungsanlage gemäss Fig. 1 von folgenden Zahlen ausgegangen: 2 m (Filterwiderstand) + 1.5 m (Rohrleitungsnetz) + 1 m (Beckeneinströmelemente) + 4 m (geodätische Höhe Technikboden-Beckenwasserspiegel) - 1 m (ø Vordruck Ausgleichsbecken) = 7.5 m.

Demgegenüber ergeben sich bei der erfindungsgemässen Badewasseraufbereitungsanlage beispielsweise gemäss Fig. 2 die folgenden Zahlen: zweiter Kreislauf (Umwälzkreislauf 90%): (2 m (Filterwiderstand) + 1.5 m (Rohrleitungsnetz) + 1 m (Beckeneinströmelemente)) - 4.5 m.

Erster Kreislauf (Schwallwasserkreislauf 10%): 2 m (Filterwiderstand) + 1.5 m (Rohrleitungsnetz) + 1 m (Beckeneinströmelemente) + 4 m (geodätische Höhe Technikboden-Beckenwasserspiegel) - 1 m (ø Vordruck Ausgleichsbecken) = 7.5 m.

Die Gesamtbilanz bei der erfinderischen Badewasseraufbereitungsanlage präsentiert sich somit folgendermassen: 0.9 × 4.5 m + 0.1 × 7.5 m = 4.8 m

Womit auch hieraus ersichtlich ist, dass sich ein Druckvorteil (und damit Energieersparnisse) von ca. 30% gegenüber demjenigen des Standes der Technik ergibt.

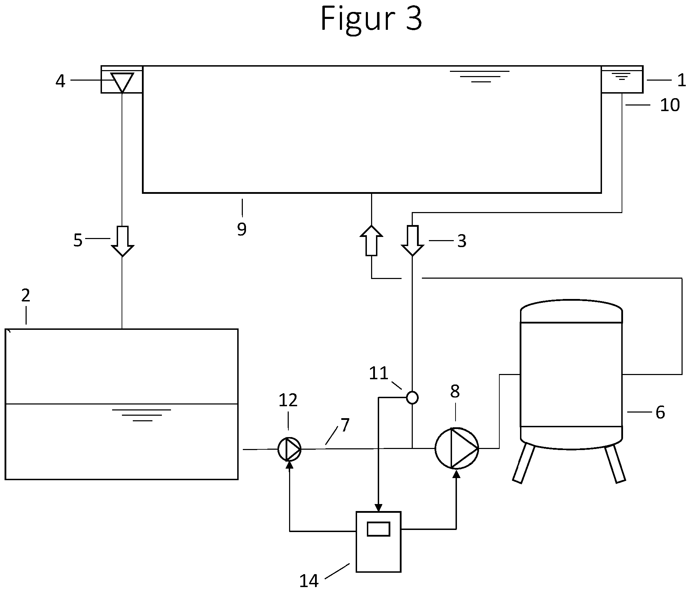

Fig. 3 zeigt eine weitere Ausführungsvariante der erfindungsgemässen Badewasseraufbereitungsanlage mit einer Filtereinheit 6 vom Typ Druckfilter. Im Unterschied zur Ausführungsvariante gemäss Fig. 2 ist bei der Ausführungsvariante gemäss Fig. 3 der zweite Kreislauf nach der ersten Pumpe 12 aber vor der zweiten Pumpe 8 mit dem ersten Kreislauf 5 zusammengeführt, so dass die zweite Pumpe 8 die gesamte Fördermenge durch die Filtereinheit 6 fördert. Die Vorteile, insbesondere der reduzierte Energiebedarf zum Betreiben der Badewasseraufbereitungsanlage, sind auch bei dieser zweiten Ausführungsvariante der Erfindung vorhanden.

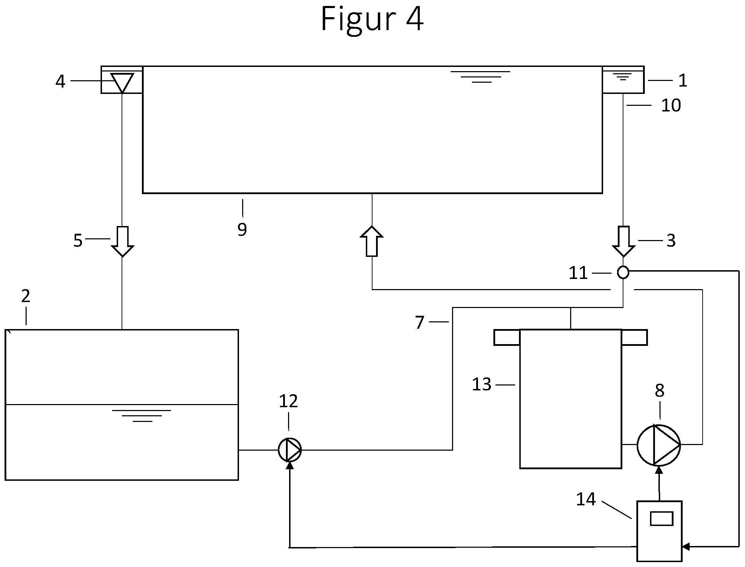

Fig. 4 zeigt eine weitere Ausführungsvariante der erfindungsgemässen Badewasseraufbereitungsanlage, bei der eine Filtereinheit 13 nicht vom Typ Druckfilter, sondern vom Typ Unterdruckfilter realisiert ist. Die zweite Pumpe 8 ist entsprechend, in Flussrichtung der wirkverbundenen Kreisläufe gesehen, nach der Filtereinheit 13 angeordnet, wobei die beiden Kreisläufe 3 und 5 unmittelbar vor der Filtereinheit 13 wirkverbunden sind.

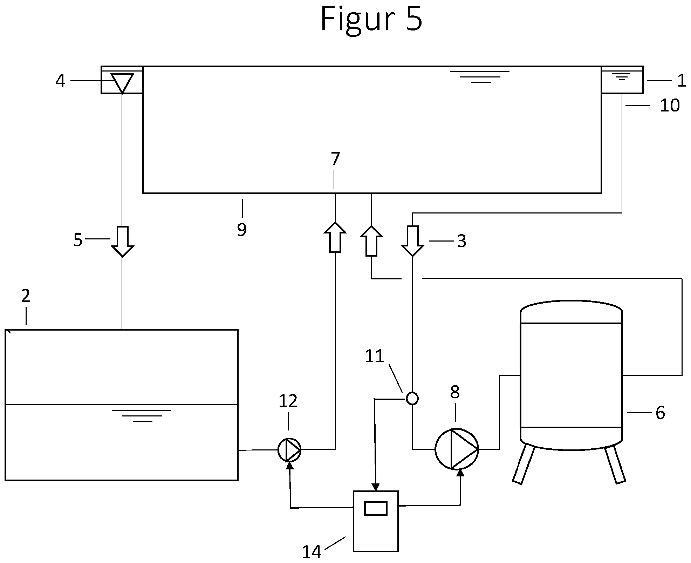

Schliesslich zeigt Fig. 5 eine weitere Ausführungsvariante der erfindungsgemässen Badewasseraufbereitungsanlage, bei der sowohl der erste Kreislauf 5 als auch der zweite Kreislauf 3 zurück zum Becken führen, wobei das Ausgleichsbecken 2 zusammen mit der ersten Pumpe 12 im ersten Kreislauf 5 enthalten ist und wobei die Filtereinheit zusammen mit der zweiten Pumpe und dem Drucksensor 11 im zweiten Kreislauf 3 enthalten sind.

In allen Ausführungsvarianten regelt die Steuereinheit 14, welche mit dem Drucksensor 11 und den beiden Pumpen 8 und 12 verbunden ist, das Niveau in der Überlaufrinne 1, indem sie das Durchflussverhältnis der beiden Kreisläufe 3 und 5 verändert. Die Steuerung erfolgt aufgrund des mit dem Drucksensor 11 gemessenen Drucks.

### BEZUGSZEICHEN

- 1: Überlaufrinne
- 2: Ausgleichsbecken
- 3: zweiter Kreislauf (Umwälzkreislauf)
- 4: Überlauf zum Abgreifen von Schwallwasser
- 5: erster Kreislauf (Schwallwasserkreislauf)
- 6: Filtereinheit (als Druckfilter)
- 7: Rückführung (des Schwallwasserkreislaufs)
- 8: zweite Pumpe (Umwälzpumpe)
- 9: Becken
- 10: Rinnenanschluss
- 11: Drucksensor
- 12: erste Pumpe (Schwallwasserpumpe)
- 13: Filtereinheit (als Unterdruckfilter)
- 14: Steuereinheit

## Patentansprüche

1. Badewasseraufbereitungsanlage umfassend ein Becken (9) mit Überlaufrinne (1) zum Auffangen von Badewasser und ein Ausgleichsbecken (2) zum Aufnehmen von Schwallwasser, wobei ein erster Kreislauf (5) von der Überlaufrinne (1) in das Ausgleichsbecken (2) und von diesem über eine erste Pumpe (12) zurück zum Becken (9) führt, wobei der erste Kreislauf (5) Badewasser in der Überlaufrinne (1) auf einem ersten Niveau abgreift, **dadurch gekennzeichnet dass** ein zweiter Kreislauf (3) von der Überlaufrinne (1) über eine zweite Pumpe (8) zurück zum Becken (9) führt, wobei der zweite Kreislauf (3) Badewasser in der Überlaufrinne (1) auf einem zweiten Niveau abgreift, und dass das erste Niveau höher als das zweite Niveau ist.

2. Badewasseraufbereitungsanlage nach Anspruch 1, **dadurch gekennzeichnet, dass** das Ausgleichsbecken (2), die erste Pumpe (12) und die zweite Pumpe (8) unterhalb des Wasserspiegels des Beckens (9) angeordnet sind.

3. Badewasseraufbereitungsanlage nach Anspruch 1 oder 2, **dadurch gekennzeichnet, dass** das erste Niveau mittels eines Überlaufs (4) derart eingestellt ist, dass Schwallwasser in der Überlaufrinne (1) vom ersten Kreislauf (5) aufnehmbar ist, ohne dass die Überlaufrinne (1) überschwappt.

4. Badewasseraufbereitungsanlage nach einem der Ansprüche 1 bis 3, **dadurch gekennzeichnet, dass** eine Filtereinheit (6, 13) mit einem Filtereingang und einem Filterausgang vorgesehen ist, dass der Filtereingang sowohl mit dem ersten Kreislauf (5) als auch mit dem zweiten Kreislauf (3) wirkverbunden ist und dass der Filterausgang mit dem Becken (9) wirkverbunden ist.

5. Badewasseraufbereitungsanlage nach einem der Ansprüche 1 bis 4, **dadurch gekennzeichnet, dass** der erste Kreislauf (5), in Flussrichtung im ersten Kreislauf (5) gesehen, nach der ersten Pumpe (12) mit dem zweiten Kreislauf (3) wirkverbunden ist.

6. Badewasseraufbereitungsanlage nach einem der Ansprüche 1 bis 5, **dadurch gekennzeichnet, dass** der zweite Kreislauf (3), in Flussrichtung im zweiten Kreislauf (3) gesehen, nach der zweiten Pumpe (8) mit dem ersten Kreislauf (5) wirkverbunden ist.

7. Badewasseraufbereitungsanlage nach einem der Ansprüche 1 bis 5, **dadurch gekennzeichnet, dass** der zweite Kreislauf (3), in Flussrichtung sowohl im ersten als auch im zweiten Kreislauf (3, 5) gesehen, vor der zweiten Pumpe (8) mit dem ersten Kreislauf (5) wirkverbunden ist und dass die zweite Pumpe (8) mit dem Eingang der Filtereinheit (6) wirkverbunden ist.

8. Badewasseraufbereitungsanlage nach einem der Ansprüche 1 bis 5, **dadurch gekennzeichnet, dass** der zweite Kreislauf (3), in Flussrichtung gesehen, vor der zweiten Pumpe (8) mit dem ersten Kreislauf (5) wirkverbunden ist und dass der Ausgang der Filtereinheit (13) mit der zweiten Pumpe (8) wirkverbunden ist.

9. Badewasseraufbereitungsanlage nach einem der vorangehenden Ansprüche, **dadurch gekennzeichnet, dass** im zweiten Kreislauf (3) ein Drucksensor (11) nach der Überlaufrinne (1) angeordnet ist.

10. Badewasseraufbereitungsanlage nach Anspruch 9, **dadurch gekennzeichnet, dass** der Drucksensor (11) mit einer Steuereinheit (14) wirkverbunden ist, die ihrerseits sowohl mit der ersten als auch mit der zweiten Pumpe (12, 8) wirkverbunden ist.

## Claims

1. Bathing water treatment system comprising a pool (9) with an overflow channel (1) for collecting bathing water and a equalizing pool (2) for receiving surge water, wherein a first circuit (5) leads from the overflow channel (1) into the equalizing pool (2) and from there via a first pump (12) back to the pool (9), wherein the first circuit (5) taps bathing water in the overflow channel (1) at a first level, **characterized in that** a second circuit (3) leads from the overflow channel (1) via a second pump (8) back to the pool (9), wherein the second circuit (3) taps bathing water in the overflow channel (1) at a second level, and **in that** the first level is higher than the second level.

2. Bathing water treatment system according to claim 1, **characterized in that** the equalizing pool (2), the first pump (12) and the second pump (8) are arranged below the water level of the pool (9).

3. Bathing water treatment system according to claim 1 or 2, **characterized in that** the first level is set by means of an overflow (4), such that surge water in the overflow channel (1) can be absorbed by the first circuit (5), without the overflow channel (1) overflowing.

4. Bathing water treatment system according to one of claims 1 to 3, **characterized in that** a filter unit (6, 13) with a filter inlet and a filter outlet is provided, **in that** the filter inlet is operatively connected both to the first circuit (5) and to the second circuit (3) and **in that** the filter outlet is operatively connected to the pool (9).

5. Bathing water treatment system according to one of claims 1 to 4, **characterized in that** the first circuit (5), seen in the flow direction in the first circuit (5), is operatively connected to the second circuit (3) after the first pump (12).

6. Bathing water treatment system according to one of claims 1 to 5, **characterized in that** the second circuit (3), seen in the flow direction in the second circuit (3), is operatively connected to the first circuit (5) after the second pump (8).

7. Bathing water treatment system according to one of claims 1 to 5, **characterized in that** the second circuit (3), seen in the flow direction in both, the first and the second circuit (3, 5), is operatively connected to the first circuit (5) before the second pump (8) and **in that** the second pump (8) is operatively connected to the inlet of the filter unit (6).

8. Bathing water treatment system according to one of claims 1 to 5, **characterized in that** the second circuit (3), seen in the flow direction, is operatively connected to the first circuit (5) before the second pump (8) and **in that** the outlet of the filter unit (13) is operatively connected to the second pump (8).

9. Bathing water treatment system according to one of the preceding claims, **characterized in that** a pressure sensor (11) is arranged in the second circuit (3) after the overflow channel (1).

10. Bathing water treatment system according to claim 9, **characterized in that** the pressure sensor (11) is operatively connected to a control unit (14), which in turn is operatively connected to both, the first and the second pump (12, 8).

## Revendications

1. Système de traitement des eaux de baignade comprenant un bassin (9) avec un canal de trop-plein (1) pour recueillir les eaux de baignade et un bassin d'égalisation (2) pour recevoir des eaux de surverse, un premier circuit (5) menant du canal de trop-plein (1) au bassin d'égalisation (2) et de là, via une première pompe (12), retournant au bassin (9), le premier circuit (5) prélevant les eaux de baignade dans le canal de trop-plein (1) à un premier niveau, **caractérisé en ce qu'**un deuxième circuit (3) menant du canal de trop-plein (1) via une deuxième pompe (8) retournant au bassin (9), le deuxième circuit (3) prélevant les eaux de baignade dans le canal de trop-plein (1) à un deuxième niveau, et **en ce que** le premier niveau est plus élevé que le deuxième niveau.

2. Système de traitement des eaux de baignade selon la revendication 1, **caractérisé en ce que** le bassin d'égalisation (2), la première pompe (12) et la deuxième pompe (8) sont disposés en dessous du niveau d'eau du bassin (9).

3. Système de traitement des eaux de baignade selon la revendication 1 ou 2, **caractérisé en ce que** le premier niveau est réglé au moyen d'un trop-plein (4), de telle sorte que l'eau de surverse dans le canal de trop-plein (1) puisse être absorbée par le premier circuit (5), sans que le canal de trop-plein (1) ne déborde.

4. Système de traitement des eaux de baignade selon l'une des revendications 1 à 3, **caractérisé en ce qu'**il est prévu une unité de filtration (6, 13) dotée d'une entrée de filtration et d'une sortie de filtration, **en ce que** l'entrée de filtration est reliée fonctionnellement à la fois au premier circuit (5) et au deuxième circuit (3) et **en ce que** la sortie de filtration est reliée fonctionnellement au bassin (9).

5. Système de traitement des eaux de baignade selon l'une des revendications 1 à 4, **caractérisé en ce que** le premier circuit (5), vu dans le sens d'écoulement dans le premier circuit (5), est relié fonctionnellement au deuxième circuit (3) après la première pompe (12).

6. Système de traitement des eaux de baignade selon l'une des revendications 1 à 5, **caractérisé en ce que** le deuxième circuit (3), vu dans le sens d'écoulement dans le deuxième circuit (3), est relié fonctionnellement au premier circuit (5) après la deuxième pompe (8).

7. Système de traitement des eaux de baignade selon l'une des revendications 1 à 5, **caractérisé en ce que** le deuxième circuit (3), vu dans le sens d'écoulement à la fois dans le premier et le deuxième circuit (3, 5), est relié fonctionnellement au premier circuit (5) avant la deuxième pompe (8) et **en ce que** la deuxième pompe (8) est reliée fonctionnellement à l'entrée de l'unité de filtration (6).

8. Système de traitement des eaux de baignade selon l'une des revendications 1 à 5, **caractérisé en ce que** le deuxième circuit (3), vu dans le sens d'écoulement, est relié fonctionnellement au premier circuit (5) avant la deuxième pompe (8) et **en ce que** la sortie de l'unité de filtration (13) est reliée fonctionnellement à la deuxième pompe (8).

9. Système de traitement des eaux de baignade selon l'une des revendications précédentes, **caractérisée en ce qu'**un capteur de pression (11) est disposé dans le deuxième circuit (3) après le canal de trop-plein (1).

10. Système de traitement des eaux de baignade selon la revendication 9, **caractérisé en ce que** le capteur de pression (11) est relié fonctionnellement à une unité de commande (14), qui à son tour est reliée fonctionnellement à la fois à la première et à la deuxième pompe (12, 8).
